# FASCICULE DE BREVET EUROPEEN

(11) **EP 1 900 255 B1**
(45) Date de publication et mention de la délivrance du brevet: **03.12.2008**
(21) Numéro de dépôt: 06778631.9
(22) Date de dépôt: 21.06.2006
(51) Int. Cl.: H05B 6/02, C21D 9/60

(54) **FOUR A INDUCTION POUR TRAITEMENT DE BANDES, TOLES, PLAQUES, EN MATERIAU CONDUCTEUR DE L'ELECTRICITE, ET INDUCTEUR POUR UN TEL FOUR.**
INDUKTIONSOFEN ZUM BEHANDELN VON ELEKTRISCH LEITFÄHIGEN STREIFEN, BLÄTTERN, PLATTEN UND FELDWICKLUNG DAFÜR
INDUCTION FURNACE FOR TREATING ELECTRICALLY CONDUCTIVE STRIPS, SHEETS, PLATES, AND FIELD WINDING THEREFOR

(30) Priorité: 24.06.2005 FR 0506463
(43) Date de publication de la demande: 19.03.2008
(73) Titulaire: Fives Celes, 68610 Lautenbach-Zell (FR)
(72) Inventeur: URING, Jean-Camille, F-68000 Colmar (FR); ROEHR, Philippe, F-68610 Lautenbach-zell (FR); REN, Jean-Yves, F-68500 Guebwiller (FR); HELLEGOUARC'H, Jean, F-94170 Le Perreux Sur Marne (FR)
(74) Mandataire: Michardière, Bernard
(86) Numéro de dépôt international: PCT/FR2006/001402
(87) Numéro de publication internationale: WO 2006/136701

(56) Documents cités:
- EP-A- 1 178 134
- US-A- 5 958 273
- US-A1- 2002 148 830
- US-B1- 6 608 290

## Description

L'invention est relative à un four de traitement thermique de bandes, tôles, plaques, en matériau conducteur de l'électricité, notamment métalliques, qui défilent dans le four constitué d'un volume fermé maintenu sous une atmosphère de gaz, lequel comporte une section de chauffage avec au moins un inducteur formé d'un couple de demi-inducteurs à flux transverse ou pseudo-transverse.

EP 1 148 762 décrit un dispositif de chauffage par induction à flux transverse.

Les inducteurs à flux transverse permettent le chauffage au défilé de bandes métalliques pour effectuer des traitements thermiques jusqu'à des températures typiquement de 750°C pour les aciers au carbone ou 1150°C pour les aciers inox. A ces températures, les bandes rayonnent de façon importante ce qui peut nuire au fonctionnement de l'inducteur, en particulier nuire à la tenue de ses bobines, culasses magnétiques, écrans de réglage, moteurs et actionneurs, éléments de refroidissement.

Afin d'éviter toute dégradation de ces équipements, il est nécessaire d'interposer une protection thermique entre la bande et l'inducteur, par exemple un dispositif tel que celui décrit dans EP 1 349 431. Ce dispositif est composé d'une enceinte étanche au gaz et au vide placée face à l'inducteur, enceinte qui entoure la bande et est raccordée à ses extrémités aux parties amont et aval du four. L'enceinte comprend un fourreau étanche au gaz et un écran thermique sur les faces internes du fourreau. Les inducteurs de chauffage sont disposés à l'extérieur de l'enceinte. Le four est interrompu dans la section des inducteurs, suivant la direction verticale, au niveau de l'enceinte.

Cette enceinte doit être transparente au flux magnétique et la plus fine possible afin de, pour un entrefer d'inducteur donné, laisser le passage le plus important possible à la bande pour éviter tout contact entre bande et écran qui puisse provoquer des défauts de surface sur le produit constitué par la bande.

WO 00/52965 présente également une protection thermique pour inducteurs de chauffage à flux transverse avec enceinte étanche. Cette protection comprend une enceinte à contour fermé entourant la bande et étanche au gaz. Bien que le raccordement aux sections amont et aval du four ne soit pas explicité, l'implantation d'une telle protection avec écran thermique entraîne une interruption du four.

L'enceinte doit assurer conjointement les fonctions d'étanchéité au gaz et de barrage thermique au rayonnement du produit chauffé. La fabrication de l'enceinte doit être effectuée avec des matériaux transparents au flux magnétique et met en oeuvre des technologies complexes qui rendent l'ensemble coûteux, fragile et délicat à utiliser et à maintenir en bon état pendant des durées importantes correspondant aux durées de vie des fours sur lesquels sont montées les enceintes. Une exécution robuste de ce type d'enceinte débouche sur des épaisseurs de parois importantes qui réduisent la petite dimension de la fenêtre de passage de la bande.

L'invention a pour but, surtout, de proposer un four de traitement thermique dans lequel le chauffage à flux transverse ou pseudo-transverse peut être effectué de manière sûre et sans nécessiter, dans la zone des inducteurs de chauffage, un équipement relativement compliqué et de fabrication coûteuse. Il est souhaitable, en outre, que la mise en place des inducteurs ne nécessite pas une interruption du four sur toute sa section.

Selon l'invention, un four de traitement thermique du genre défini précédemment pour bandes, tôles, plaques en matériau conducteur de l'électricité, notamment métalliques, qui défilent dans le four, est caractérisé en ce que, dans la section de chauffage, au moins deux parois du four comportent chacune une ouverture en face de chacun des deux demi-inducteurs, et deux panneaux transparents au flux magnétique couvrent respectivement lesdites ouvertures, ces panneaux comprenant à leur périphérie une forme adaptée à celle de la partie fixe du four entourant chaque ouverture de façon à constituer un barrage au rayonnement thermique de la bande sans assurer une étanchéité au gaz, et chaque demi-inducteur est logé dans une chambre délimitée par des parois en saillie vers l'extérieur du four, ces chambres étant isolées de manière étanche de l'atmosphère ambiante mais communiquant avec le volume intérieur du four.

Généralement, chaque panneau transparent au flux magnétique est muni d'un écran thermique.

De préférence, les panneaux transparents au flux magnétique, avec écran thermique, forment chacun un bouclier thermique qui est fixé sur le demi-inducteur associé .

En variante, les panneaux transparents au flux magnétique, avec écran thermique, peuvent être fixés à la paroi du four, et sont indépendants des demi-inducteurs.

Avantageusement, la face de l'écran thermique tournée vers la bande est sensiblement dans le même plan que la face interne de la paroi du four.

Le four peut comporter une chicane, en particulier double ou de forme plus complexe, entre la périphérie du panneau et le bord de l'ouverture de la paroi du four pour réduire la transmission du rayonnement de la bande.

Des matières fibreuses peuvent être mises en place dans la chicane pour réduire la transmission du rayonnement de la bande sans assurer l'étanchéité au gaz entre le four et les chambres contenant les demi-inducteurs.

Une atmosphère de même nature que celle du four peut régner dans les chambres contenant les demi-inducteurs. L'atmosphère du four et celle des chambres peut être formée d'un mélange de gaz inerte et d'hydrogène à plus de 5% en volume.

Avantageusement, le montage de chaque demi-inducteur s'opère de façon à ce que le panneau avec écran thermique vienne s'encastrer dans des chicanes prévues en bordure de l'ouverture et destinées à réduire la transmission du rayonnement de la bande.

Le four peut comporter des moyens de guidage et des moyens de support de chaque demi-inducteur pour un montage suivant une translation perpendiculaire à la bande. En variante, le four peut comporter des moyens de guidage et des moyens de support de chaque demi-inducteur pour un montage suivant une translation parallèle à la bande.

Chaque chambre contenant les demi-inducteurs peut comporter des moyens d'injection d'un gaz correspondant à, ou compatible avec, l'atmosphère du four, à une pression légèrement supérieure à celle du four afin d'éviter la pénétration de gaz chauds du four dans les chambres.

L'invention est également relative à un inducteur à flux transverse comportant deux demi-inducteurs pour être installés de chaque côté de produits qui défilent, caractérisé en ce que sur chaque demi-inducteur est fixé un bouclier thermique, transparent au flux magnétique, comprenant à sa périphérie une forme adaptée à celle de bords fixes d'une ouverture dans une paroi du four de façon à constituer un barrage au rayonnement thermique de la bande vers les chambres dans lesquelles sont placés les demi-inducteurs, l'ensemble étant placé dans une atmosphère de nature compatible avec celle du four.

De préférence, le montage de l'inducteur s'opère de façon à ce que le bouclier thermique vienne s'encastrer dans des chicanes destinées à réduire la transmission du rayonnement de la bande.

L'invention consiste, mises à part les dispositions exposées ci-dessus, en un certain nombre d'autres dispositions dont il sera plus explicitement question ci-après à propos d'exemples de réalisation décrits avec références aux dessins annexés, mais qui ne sont nullement limitatifs. Sur ces dessins :
Fig. 1 est une coupe schématique par un plan vertical d'une partie d'une ligne de traitement thermique selon l'invention.
Fig. 2 est une section schématique suivant la ligne II-II de Fig. 1.
Fig.3 est une vue simplifiée schématique en perspective, à plus grande échelle, avec parties arrachées de la zone du four de traitement correspondant à la section de chauffage, sans inducteur de chauffage ni panneau de fermeture.
Fig.4 est une vue schématique en perspective d'un panneau de fermeture de la section de chauffage.
Fig.5 est une vue schématique à plus grande échelle en coupe par un plan horizontal de la section de chauffage,
Fig.6 est une coupe verticale à plus grande échelle d'une partie de la section de chauffage du four avec un inducteur et son bouclier thermique monté sur une paroi du four.
Fig. 7 montre, semblablement à Fig.6, une variante de réalisation.
Fig. 8 est une coupe verticale partielle, à grande échelle, au niveau d'une chicane.
Fig.9 est une coupe semblable à Fig.8 illustrant une variante de chicane.
Fig.10 est une coupe verticale d'une variante de réalisation au niveau de l'inducteur, et
Fig. 11 est une coupe verticale d'une autre variante de réalisation.

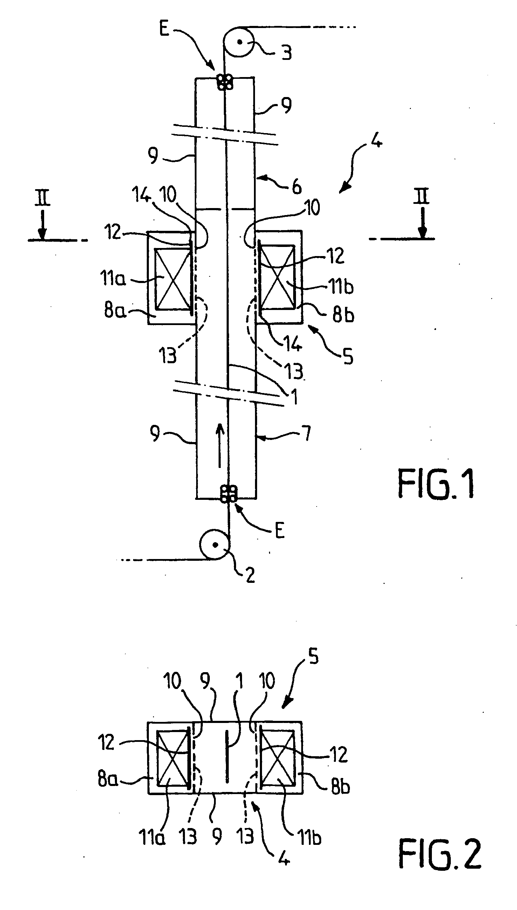

En se reportant à Fig.1 des dessins, on peut voir une partie d'une ligne de traitement thermique d'une bande métallique 1, notamment d'une bande d'acier qui défile en continu, à vitesse constante ou variable. Dans l'exemple représenté, la bande 1 se déplace verticalement entre deux rouleaux respectivement inférieur 2 et supérieur 3. Cet exemple n'est pas limitatif, et la bande 1 pourrait défiler horizontalement, les explications qui suivent étant transposables à une telle configuration.

La ligne de traitement comprend un four 4 , généralement à section transversale sensiblement rectangulaire. Le four 4 comporte au moins une section de chauffage 5 équipée, de chaque côté de la bande, d'un demi-inducteur à flux transverse ou pseudo-transverse 11a, 11b. Un couple de demi-inducteurs 11a, 11b constitue un inducteur de chauffage. Selon les caractéristiques de production de la ligne, plusieurs sections de chauffage identiques ou semblables peuvent être placées à la suite les unes des autres sur un même brin vertical ou sur plusieurs brins parallèles. Chaque section de chauffage sera réalisée de façon identique ou similaire aux explications qui suivent.

Le four 4 est également équipé d'au moins une section de refroidissement 6 en aval de la ou des sections de chauffage, ainsi que d'équipements (non représentés) de contrôle de l'atmosphère à l'intérieur du four. Ces équipement réalisés selon l'état de la technique ne sont pas détaillés ici. Le four 4 constitue un volume fermé, avec des moyens d'étanchéité E à l'entrée et à la sortie de la bande 1, maintenu sous atmosphère de gaz. Le gaz est avantageusement formé par un mélange de gaz inerte, tel que de l'azote, et d'hydrogène, notamment à plus de 5% d'hydrogène en volume pour favoriser les échanges thermiques, et en particulier dans la section de refroidissement 6 qui communique avec la section de chauffage.

La section de chauffage 5 peut être précédée d'une chambre de traitement 7 assurant, par exemple, un préchauffage.

Chaque demi-inducteur 11a, 11 b est logé dans une chambre 8a, 8b prévue en saillie vers l'extérieur sur une paroi respective du four. Les parois limitant chaque chambre 8a, 8b établissent une barrière étanche entre le volume intérieur de la chambre et l'atmosphère extérieure.

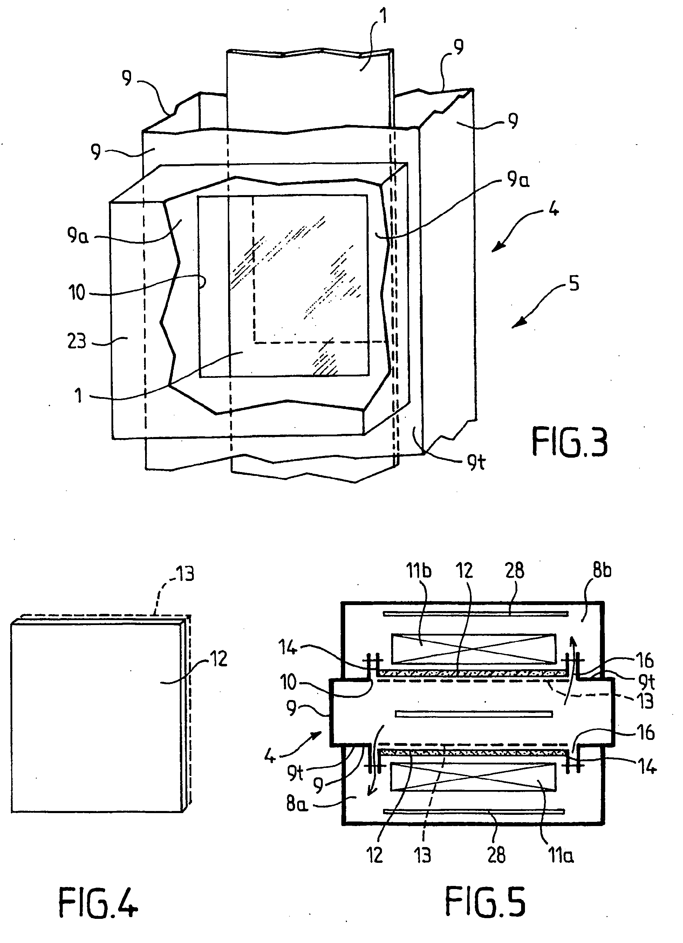

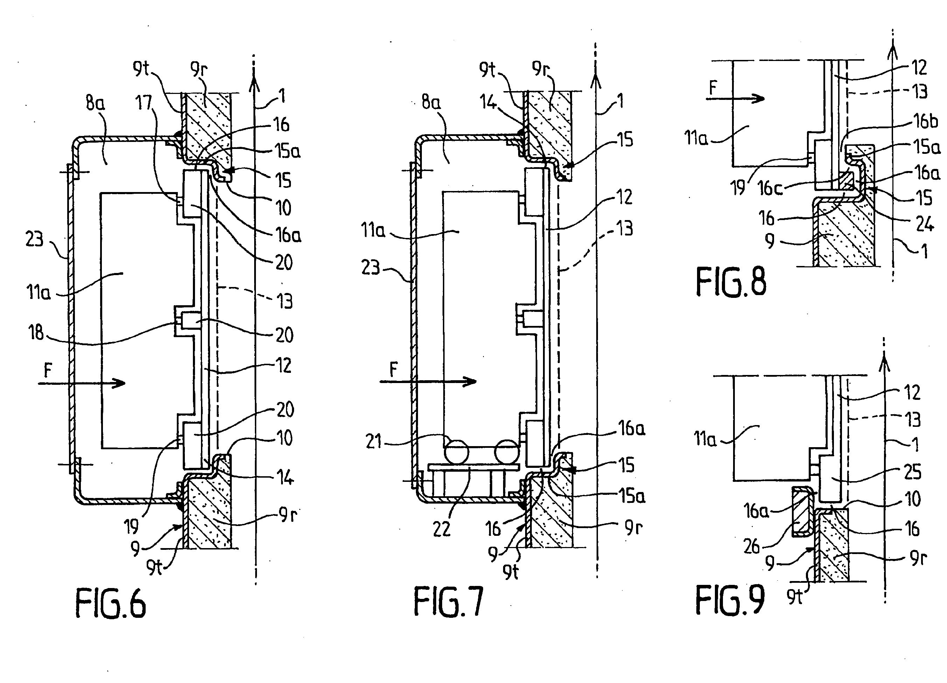

Dans la section de chauffage, les parois 9 du four comportent, dans leurs grandes faces en regard, une ouverture 10 en face de chaque demi-inducteur, non représenté sur Fig.3. Un panneau 12 transparent au flux magnétique, avec écran thermique 13, couvre, chaque ouverture 10. Les parois du four, généralement en tôle d'acier 9t éventuellement revêtue de réfractaire 9r (Fig.6 et 7), se prolongent dans la section de chauffage. Les petites faces et les grandes faces, dont des parties 9a (Fig.3) entourent les ouvertures 10, sont ainsi continues suivant la direction verticale, et ne sont pas interrompues suivant toute une section transversale au niveau des inducteurs. Les parois des chambres 8a, 8b autour de chaque demi-inducteur 11a, 11b, peuvent être réalisées par prolongement et mise en forme, avec parties repliées, des parois en tôle 9 du four.

Le panneau 12 est avantageusement plan. Un tel panneau peut être réalisé en matériau composite, résine époxy ou similaire ou en matériau céramique ou en fibres de verre ou en stratifié. Ce type de panneau est particulièrement résistant mécaniquement et thermiquement, et ne présente pas de zones fragiles.

L'écran thermique 13 peut être constitué, par exemple, comme prévu dans EP 1 349 431, par une matrice de pavés (non représentés) en matériau réfractaire qui entoure des tubes de circulation d'eau de refroidissement (non représentés). Les tubes de refroidissement peuvent être réalisés sous forme de serpentins. L'écran thermique 13 est fixé contre la face du panneau 12 tournée vers la bande 1. La face de l'écran thermique 13 tournée vers la bande 1 est de préférence située dans le plan de la face interne de la paroi 9 du four, ou au voisinage de ce plan. Le panneau 12 a généralement une forme rectangulaire, de même que l'ouverture 10.

Bien entendu, la technologie de l'écran thermique 13 est adaptée à la température du produit qui défile. Cette température peut être de 200°C seulement dans le cas de produits autres que des bandes d'acier.

Le panneau 12 comprend à sa périphérie 14 (voir notamment Fig.5 et 6) une forme adaptée à celle de la partie fixe du four entourant l'ouverture 10 de façon à constituer un barrage au rayonnement thermique de la bande vers la chambre, par exemple 8a, logeant l'inducteur, par exemple 11 a.

Avantageusement, un interstice 16 existant entre la périphérie 14 du panneau et le contour de l'ouverture 10 est masqué au rayonnement de la bande 1 par un rebord 15 (Fig.6) de la paroi du four recouvrant l'interstice 16.

Le rebord 15 est situé du côté de la bande 1 et fait saillie vers le centre de l'ouverture 10 relativement au reste 15a de la paroi de l'ouverture qui entoure le panneau 13. Une chicane est ainsi formée définissant un trajet en angle droit comportant une branche, formée par l'interstice 16, orthogonale au plan de la bande 1 et une branche 16a parallèle au plan de la bande 1.

Le panneau 12 avec son écran thermique 13 peut être fixé, de manière démontable, directement à la paroi du four indépendamment de l'inducteur, comme illustré sur Fig.5. La fixation peut être réalisée à l'aide de brides prévues en bordure du panneau et du contour des ouvertures 10, avec boulons de serrage traversant les brides. Les gaz peuvent passer du four vers les chambres 8a, 8b par les interstices 16 comme illustré par des flèches sur Fig.5 , ou circuler en sens inverse.

Selon une variante avantageuse, l'ensemble du panneau 12 et de l'écran thermique 13 forme un bouclier thermique qui est fixé sur le demi-inducteur, par exemple 11 a, en différents points selon la forme de la face de l'inducteur tournée vers la bande, et contre laquelle est fixé le bouclier thermique. Selon Fig.6, le maintien du panneau 12 et de l'écran thermique 13 sur le demi-inducteur est rendu le plus efficace possible en étant réalisé en plusieurs points tels que 17,19 au voisinage des bords et 18 dans la partie centrale.

Le panneau 12 peut être renforcé par des goussets 20, qui en améliorent la tenue mécanique, dans toutes les zones où cela est possible.

Dans certaines zones, l'épaisseur totale du panneau 12 et de l'écran thermique 13 peut être réduite au minimum autorisé par la technique employée ce qui permet d'augmenter la distance entre les écrans thermiques 13 entre lesquels défile la bande 1.

La configuration de Fig.6 permet la réalisation d'un écran renforcé et rigide, formé par l'ensemble du panneau 12 et de l'écran thermique 13 parfaitement maintenu sur le demi-inducteur 11a tout en ayant une épaisseur minimale.

Les Fig.6 à 9 et 10 ne représentent qu'une partie de la section de chauffage située d'un côté de la bande 1. L'autre partie, située de l'autre côté de la bande, est semblable.

Fig.7 est un développement de la réalisation schématisée sur Fig.6, illustrant un montage du demi-inducteur 11a permettant de positionner l'écran thermique 13 et le panneau dans l'ouverture 10 de la paroi du four, en particulier de façon à réaliser une chicane s'opposant à la transmission du rayonnement de la bande 1. Le demi-inducteur 11a est monté sur des galets 21 pouvant rouler sur des rails 22 fixés sur la paroi horizontale inférieure de la chambre 8a et orientés perpendiculairement au plan de la bande 1. La paroi arrière de la chambre 8a comporte une ouverture qui peut être fermée de manière étanche par une porte 23. Pour le montage, la porte 23 est retirée ce qui permet d'introduire le demi-inducteur 11a, muni de son bouclier thermique, dans la chambre 8a par une translation perpendiculaire au plan de la bande 1 suivant la direction de la flèche F. Des butées garantissent le bon positionnement de l'ensemble du panneau 12 et de l'écran thermique 13 et ainsi l'efficacité de la chicane 16,16a. Après mise en place du demi-inducteur avec son bouclier thermique, la porte 23 est fixée de manière étanche sur la paroi arrière de la chambre 8a.

La chicane formée peut avoir une forme plus complexe comme illustrée sur les Fig. 8, 9 et 10.

Fig. 8 illustre une réalisation particulière de la chicane permettant de renforcer le barrage contre le rayonnement de la bande.

A cet effet, la périphérie du panneau 12 comporte un rebord 24, par exemple à section rectangulaire, en saillie en direction de la bande 1. Le rebord 15 de la paroi du four comporte un retour 15a en saillie vers le panneau 12 et délimite une gorge dans laquelle le rebord 24 vient s'inscrire. La chicane complexe ainsi formée comporte une première partie 16b parallèle à la bande 1, suivie d'une partie 16c orthogonale à la bande 1 puis de la partie 16a parallèle à la bande 1 et enfin de l'interstice 16.

Toutes les parties de la chicane sont protégées contre un rayonnement thermique direct de la bande 1 par le rebord 15 et son retour 15a.

Le montage du demi-inducteur 11a, selon la réalisation de Fig.8, s'effectue de la même manière que celle exposée à propos de Fig. 7 par un déplacement suivant une direction F orthogonale au plan de la bande 1.

On peut considérer que l'écran présente une forme particulière sur ses quatre bords de façon à obtenir une chicane plus importante ou l'assemblage de plusieurs chicanes destinées à améliorer leur efficacité à stopper le rayonnement de la bande.

On peut également considérer que les chicanes sont garnies, par exemple, d'un réfractaire fibreux facilement déformable durant le montage de l'écran et assurant l'arrêt total du rayonnement de la bande, sans toutefois assurer l'étanchéité au gaz entre le volume intérieur du four et la chambre du demi-inducteur.

Fig. 9 présente une variante de réalisation de la chicane destinée à stopper le rayonnement de la bande. Le contour du panneau 12 présente un bord 25 en saillie vers le demi-inducteur 11 a. Le contour de l'ouverture 10 de la paroi du four présente un retour 26 vers l'extérieur délimitant une gorge en angle droit dans laquelle vient se loger le bord 25 pour former une chicane avec branche horizontale 16 s'ouvrant dans le four suivie d'une branche 16a parallèle à la bande 1 et s'ouvrant dans la chambre 8a. La mise en place de chaque demi-inducteur s'effectue par une translation parallèle au plan de la bande 1.

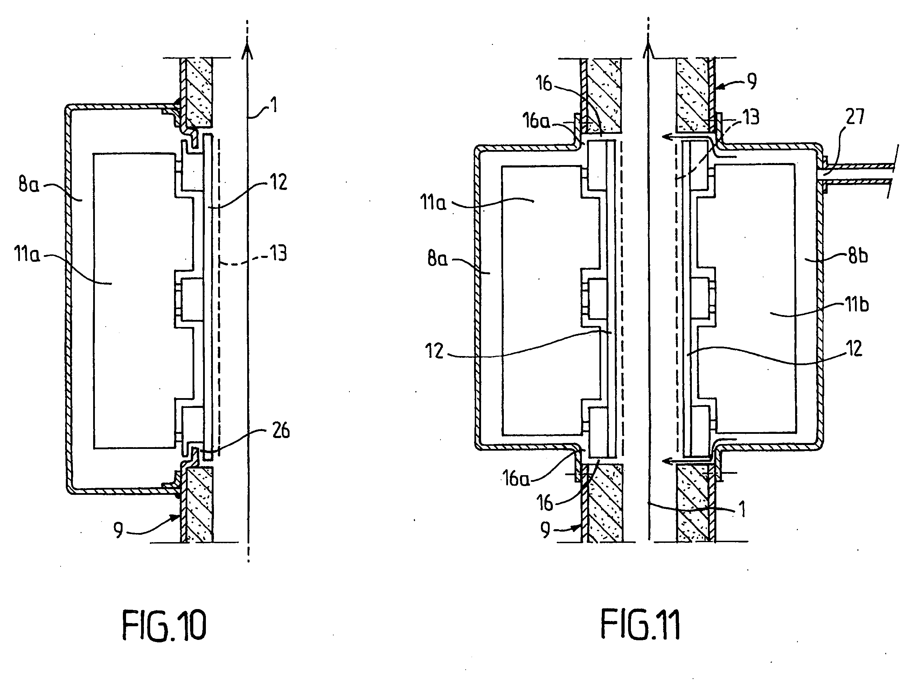

Fig. 10 présente une autre variante de réalisation de la chicane suivant le mode de montage du demi-inducteur par déplacement parallèle au plan de la bande. La chicane 26 a la forme d'une grecque avec nervures et rainures horizontales dans l'épaisseur des parois du four et de l'écran, permettant un engagement et un dégagement par translation horizontale parallèle à la bande.

Fig.11 présente le montage des demi-inducteurs 11 a, 11 b de part et d'autre de la bande 1.

Une arrivée 27 de gaz est prévue dans au moins une des chambres, par exemple 8b, si elle communique avec l'autre chambre 8a, ou bien une arrivée de gaz est prévue dans chacune des deux chambres 8a, 8b si elles ne communiquent pas. La température du gaz injecté est suffisamment faible pour maintenir les chambres 8a, 8b à une température acceptable de fonctionnement, par exemple 50°C

On peut ajuster la pression de gaz injecté dans chaque chambre 8a, 8b à un niveau légèrement supérieur à celui régnant dans le four afin que la circulation de gaz au niveau de la chicane 16, 16a four/écran s'opère de la chambre vers le four et non l'inverse. On évite ainsi la pénétration de gaz chauds, provenant du four, vers l'intérieur de la chambre.

On peut utiliser comme gaz injecté dans les chambres 8a, 8b la même composition de gaz que celle existant à l'intérieur du four ou un mélange différent afin, par exemple, d'enrichir l'ambiance du four avec un composant du procédé de traitement. Par exemple pour une atmosphère formée par un mélange azote (N₂) et hydrogène (H₂), on peut établir une pressurisation des chambres 8a, 8b avec une composition plus riche en H₂ que l'ambiance du four ou, au contraire plus riche en N₂ , dans le but de corriger la concentration de l'intérieur du four.

La limitation de la température régnant dans les chambres 8a, 8b peut aussi être obtenue sans injection de gaz froid, notamment grâce à un circuit de refroidissement de l'inducteur ou grâce à un échangeur supplémentaire 28 (Fig.5) installé dans les chambres 8a, 8b, et comportant par exemple des serpentins dans lesquels circulent de l'eau de refroidissement.

La dimension des écrans thermiques est définie en fonction des caractéristiques magnétiques de l'inducteur et du passage des lignes de champ afin d'assurer leur totale transparence à l'ensemble du flux magnétique et afin d'éviter tout risque d'échauffement des parties métalliques des parois 9 situées autour des écrans et constituant le four traditionnel.

Le volume interne des sections de chauffage et de refroidissement ainsi que le volume interne des chambres 8a, 8b est bien protégé contre les entrées éventuelles d'air et d'oxygène, notamment grâce à une surpression du mélange d'hydrogène et d'azote vis-à-vis de l'atmosphère ambiante.

La description qui précède a été effectuée principalement à propos d'une bande 1 continue. L'invention s'applique également à d'autres produits espacés les uns des autres tels que des tôles ou des plaques, ou similaires, en matériau conducteur de l'électricité, qui défilent à vitesse constante ou variable.

## Revendications

1. Four de traitement thermique de bandes, tôles, plaques en matériau conducteur de l'électricité, notamment métalliques, qui défilent dans le four constitué d'un volume fermé maintenu sous une atmosphère de gaz, lequel comporte une section de chauffage avec au moins un inducteur formé d'un couple de demi-inducteurs à flux transverse ou pseudo-transverse, **caractérisé en ce que**, dans la section de chauffage (5), au moins deux parois (9) du four comportent chacune une ouverture (10) en face de chacun des deux demi-inducteurs (11a, 11 b) et deux panneaux (12) transparents au flux magnétique couvrent respectivement lesdites ouvertures (10), ces panneaux (12) comprenant à leur périphérie (14) une forme adaptée à celle de la partie fixe du four entourant chaque ouverture de façon à constituer un barrage au rayonnement thermique de la bande sans assurer une étanchéité au gaz, et chaque demi-inducteur (11 a, 11 b) est logé dans une chambre (8a, 8b) délimitée par des parois en saillie vers l'extérieur du four, ces chambres étant isolées de manière étanche de l'atmosphère ambiante mais communiquant avec le volume intérieur du four.

2. Four selon la revendication 1, **caractérisé en ce que** chaque panneau transparent au flux magnétique est muni d'un écran thermique (13).

3. Four selon la revendication 2, **caractérisé en ce que** les panneaux transparents au flux magnétique (12), avec écran thermique (13), forment chacun un bouclier thermique qui est fixé sur le demi-inducteur associé (11a, 11 b).

4. Four selon la revendication 2, **caractérisé en ce que** les panneaux transparents au flux magnétique (12), avec écran thermique (13), sont fixés à la paroi (9) du four, et sont indépendants des demi-inducteurs.

5. Four selon l'une des revendications précédentes, **caractérisé en ce que** la face de l'écran thermique (13) tournée vers la bande (1) est sensiblement dans le même plan que la face interne de la paroi du four.

6. Four selon l'une des revendications précédentes, **caractérisé en ce qu'**il comporte une chicane (16, 16a ; 16b, 16c ; 26), en particulier double ou de forme plus complexe, entre la périphérie (14) du panneau et le bord de l'ouverture (10) de la paroi du four pour réduire la transmission du rayonnement de la bande.

7. Four selon la revendication 6, **caractérisé en ce que** des matières fibreuses sont mises en place dans la chicane pour réduire la transmission du rayonnement de la bande sans assurer l'étanchéité au gaz entre le four et les chambres contenant les demi-inducteurs.

8. Four selon l'une des revendications précédentes, **caractérisé en ce qu'**une atmosphère de même nature que celle du four règne dans les chambres (8a, 8b) contenant les demi-inducteurs (11 a, 11b).

9. Four selon la revendication 8, **caractérisé en ce que** l'atmosphère du four et celle des chambres (8a, 8b) est formée d'un mélange de gaz inerte et d'hydrogène à plus de 5% en volume.

10. Four selon la revendication 6 ou 7, **caractérisé en ce que** le montage de chaque demi-inducteur (11a, 11 b) s'opère de façon à ce que l'écran thermique vienne s'encastrer dans des chicanes prévues en bordure de l'ouverture et destinées à réduire la transmission du rayonnement de la bande.

11. Four selon l'une des revendications précédentes, **caractérisé en ce qu'**il comporte des moyens de guidage et des moyens de support (22) de chaque demi-inducteur pour un montage suivant une translation perpendiculaire à la bande (1).

12. Four selon l'une des revendications 1 à 10, **caractérisé en ce qu'**il comporte des moyens de guidage et des moyens de support de chaque demi-inducteur pour un montage suivant une translation parallèle à la bande (1).

13. Four selon l'une des revendications précédentes, **caractérisé en ce qu'**il comporte des moyens d'injection (27) d'un gaz correspondant à, ou compatible avec, l'atmosphère du four, dans les chambres (8a,8b) contenant les demi-inducteurs (11a, 11 b) à une pression légèrement supérieure à celle du four pour éviter la pénétration de gaz chauds du four dans les chambres (8a, 8b).

14. Inducteur à flux transverse formé de deux demi-inducteurs, pour un four selon la revendication 2, **caractérisé en ce que** sur chaque demi-inducteur (11a, 11b) est fixé un bouclier thermique (12, 13), transparent au flux magnétique, comprenant à sa périphérie (14) une forme adaptée à celle de bords fixes d'une ouverture (10) dans une paroi du four de façon à constituer un barrage au rayonnement thermique de la bande vers les chambres dans lesquelles sont placés les demi-inducteurs, l'ensemble étant placé dans une atmosphère de nature compatible avec celle du four.

## Claims

1. Furnace for the heat treatment of strips, sheets and plates made from electrically conductive material, in particular metal, which pass in the furnace consisting of a closed volume maintained under a gas atmosphere, which comprises a heating section with at least one inductor formed from a pair of transverse or pseudo-transverse flow half-inductors, **characterised in that**, in the heating section (5), at least two walls (9) of the furnace each comprise an opening (10) facing each of the two half-inductors (11a, 11b), and two panels (12) transparent to magnetic flux respectively cover the said openings (10), these panels (12) comprising at their periphery (14) a shape adapted to that of the fixed part of the furnace surrounding each opening so as to constitute a barrage to the thermal radiation from the strip without providing gastightness, and each half-inductor (11a, 11b) is housed in a chamber (8a, 8b) delimited by walls projecting towards the outside of the furnace, these chambers being isolated sealingly from the ambient atmosphere but communicating with the internal volume of the furnace.

2. Furnace according to claim 1, **characterised in that** each panel transparent to magnetic flux is provided with a heat screen (13).

3. Furnace according to claim 2, **characterised in that** the panels transparent to magnetic flux (12), with heat screen (13), each form a heat shield that is fixed to the associated half-inductor (11a, 11b).

4. Furnace according to claim 2, **characterised in that** the panels transparent to magnetic flux (12), with heat screen (13), are fixed to the wall (9) of the furnace and are independent of the half-inductors.

5. Furnace according to one of the preceding claims, **characterised in that** the face of the heat screen (13) turned towards the strip (1) is substantially in the same plane as the internal face of the wall of the furnace.

6. Furnace according to one of the preceding claims, **characterised in that** it comprises a baffle (16, 16a; 16b, 16c; 26), in particular double or with a more complex shape, between the periphery (14) of the panel and the edge of the opening (10) in the wall of the furnace in order to reduce the transmission of the radiation from the strip.

7. Furnace according to claim 6, **characterised in that** fibrous materials are placed in the baffle in order to reduce the transmission of radiation from the strip without providing gastightness between the furnace and the chambers containing the half-inductors.

8. Furnace according to one of the preceding claims, **characterised in that** an atmosphere of the same nature as that of the furnace prevails in the chambers (8a, 8b) containing the half-inductors (11a, 11b).

9. Furnace according to claim 8, **characterised in that** the atmosphere of the furnace and that of the chambers (8a, 8b) is formed by a mixture of inert gas and hydrogen at the rate of more than 5% by volume.

10. Furnace according to claim 6 or 7, **characterised in that** the mounting of each half-inductor (11a, 11b) takes place so that the heat screen comes to be embedded in baffles provided at the border of the opening and intended to reduce the transmission of the radiation from the strip.

11. Furnace according to one of the preceding claims, **characterised in that** it comprises means of guiding and means of supporting (22) each half-inductor for mounting in a translation perpendicular to the strip (1).

12. Furnace according to one of claims 1 to 10, **characterised in that** it comprises means of guiding and means of supporting each half-inductor for mounting in a translation parallel to the strip (1).

13. Furnace according to one of the preceding claims, **characterised in that** it comprises means (27) of injecting a gas corresponding to, or compatible with, the atmosphere in the furnace, into the chambers (8a, 8b) containing the half-inductors (11a, 11b) at a pressure slightly greater than that of the furnace in order to prevent the penetration of hot gases from the furnace into the chambers (8a, 8b).

14. Transverse flow inductor formed by two half-inductors, for a furnace according to claim 2, **characterised in that**, on each half-inductor (11a, 11b), there is fixed a heat shield (12, 13), transparent to magnetic flux, comprising at its periphery (14) a shape adapted to that of the fixed edges of an opening (10) in a wall of the furnace so as to constitute a barrage to the thermal radiation from the strip to the chambers in which the half-inductors are placed, the assembly being placed in an atmosphere with a nature compatible with that of the furnace.

## Patentansprüche

1. Ofen für die Wärmebehandlung von Streifen, Blechen, Platten aus elektrisch leitendem Material, insbesondere aus Metall, die sich in dem von einem unter einer Gasatmosphäre gehaltenen geschlossenen Raum gebildeten Ofen fortbewegen, der einen Heizabschnitt mit wenigstens einem Induktor aufweist, welcher von einem Paar Halbinduktoren mit Querstrom oder Pseudoquerstrom gebildet ist, **dadurch gekennzeichnet, dass** in dem Heizabschnitt (5) wenigstens zwei Wände (9) des Ofens jeweils eine Öffnung (10) gegenüber einem jeden der beiden Halbinduktoren (11a, 11b) aufweisen und zwei magnetflussdurchlässige Platten (12) jeweils die Öffnungen (10) bedecken, wobei diese Platten (12) an ihrem Umfang (14) eine Form aufweisen, die derjenigen des festen Teils des Ofens, der jede Öffnung umgibt, angepasst ist, so dass eine Sperre für die Wärmestrahlung des Streifens gebildet wird, ohne für eine Gasdichtigkeit zu sorgen, und jeder Halbinduktor (11a, 11b) in einer Kammer (8a, 8b), die durch zur Außenseite des Ofens vorspringende Wände begrenzt ist, untergebracht ist, wobei diese Kammern gegenüber der Umgebungsatmosphäre dicht isoliert sind, jedoch mit dem Innenraum des Ofens in Verbindung stehen.

2. Ofen nach Anspruch 1, **dadurch gekennzeichnet, dass** jede magnetflussdurchlässige Platte mit einem Wärmeschutz (13) versehen ist.

3. Ofen nach Anspruch 2, **dadurch gekennzeichnet, dass** die magnetflussdurchlässigen Platten (12) mit Wärmeschutz (13) jeweils einen Hitzeschild bilden, der an dem zugeordneten Halbinduktor (11a, 11b) befestigt ist.

4. Ofen nach Anspruch 2, **dadurch gekennzeichnet, dass** die magnetflussdurchlässigen Platten (12) mit Wärmeschutz (13) an der Wand (9) des Ofens befestigt und von den Halbinduktoren unabhängig sind.

5. Ofen nach einem der vorhergehenden Ansprüche, **dadurch gekennzeichnet, dass** die dem Streifen (1) zugewandte Fläche des Wärmeschutzes (13) im wesentlichen in der gleichen Ebene wie die Innenseite der Wand des Ofens liegt.

6. Ofen nach einem der vorhergehenden Ansprüche, **dadurch gekennzeichnet, dass** er zwischen dem Umfang (14) der Platte und dem Rand der Öffnung (10) der Wand des Ofens einen Hindernisweg (16, 16a; 16b, 16c; 26), insbesondere doppelten Hindernisweg oder Hindernisweg komplexerer Form aufweist, um die Übertragung der Strahlung des Streifens zu verringern.

7. Ofen nach Anspruch 6, **dadurch gekennzeichnet, dass** in dem Hindernisweg Fasermaterialien angebracht sind, um die Übertragung der Strahlung des Streifens zu verringern, ohne für Gasdichtigkeit zwischen dem Ofen und den die Halbinduktoren enthaltenden Kammern zu sorgen.

8. Ofen nach einem der vorhergehenden Ansprüche, **dadurch gekennzeichnet, dass** in den die Halbinduktoren (11a, 11b) enthaltenden Kammern (8a, 8b) eine Atmosphäre gleicher Art wie der des Ofens herrscht.

9. Ofen nach Anspruch 8, **dadurch gekennzeichnet, dass** die Atmosphäre des Ofens und die der Kammern (8a, 8b) von einer Mischung aus Inertgas und Wasserstoff mit mehr als 5 Vol.-% gebildet ist.

10. Ofen nach Anspruch 6 oder 7, **dadurch gekennzeichnet, dass** die Montage jedes Halbinduktors (11a, 11b) derart erfolgt, dass der Wärmeschutz in Hinderniswege eingreift, die am Rand der Öffnung vorgesehen und dazu bestimmt sind, die Übertragung der Strahlung des Streifens zu verringern.

11. Ofen nach einem der vorhergehenden Ansprüche, **dadurch gekennzeichnet, dass** er Mittel zum Führen und Mittel zum Tragen (22) eines jeden Halbinduktors für ein Anbringen durch ein zum Streifen (1) senkrechtes Verschieben aufweist.

12. Ofen nach einem der Ansprüche 1 bis 10, **dadurch gekennzeichnet, dass** er Mittel zum Führen und Mittel zum Tragen eines jeden Halbinduktors für ein Anbringen durch ein zum Streifen (1) paralleles Verschieben aufweist.

13. Ofen nach einem der vorhergehenden Ansprüche, **dadurch gekennzeichnet, dass** er Mittel (27) zum Einspritzen eines Gases, das der Atmosphäre des Ofens entspricht oder mit dieser vereinbar ist, in die die Halbinduktoren (11a, 11b) enthaltenden Kammern (8a, 8b) unter einem Druck, der geringfügig höher als der des Ofens ist, umfasst, um das Eindringen von heißen Gasen aus dem Ofen in die Kammern (8a, 8b) zu vermeiden.

14. Von zwei Halbinduktoren gebildeter Querstrom-Induktor für einen Ofen nach Anspruch 2, **dadurch gekennzeichnet, dass** an jedem Halbinduktor (11a, 11b) ein magnetflussdurchlässiger Hitzeschild (12, 13) befestigt ist, der an seinem Umfang (14) eine Form aufweist, die derjenigen von festen Rändern einer Öffnung (10) in einer Wand des Ofens angepasst ist, so dass eine Sperre für die Wärmestrahlung des Streifens in Richtung der Kammern, in denen die Halbinduktoren angeordnet sind, gebildet wird, wobei das Ganze in einer Atmosphäre angeordnet ist, deren Art mit der des Ofens vereinbar ist.
